# FASCICULE DE BREVET EUROPEEN

(11) **EP 3 898 303 B1**
(45) Date de publication et mention de la délivrance du brevet: **23.08.2023**
(21) Numéro de dépôt: 19845756.6
(22) Date de dépôt: 16.12.2019
(51) Int. Cl.: B60J 1/10, B60J 10/265, B60J 10/78, B60R 13/04

(54) **VITRAGE A JOINT PROFILE ENCAPSULE COMPORTANT UNE PIECE RAPPORTEE FIXEE AU MOYEN D'UN CROCHET**
GLASSCHEIBE MIT EINER VERKAPSELTEN PROFILIERTEN VERBINDUNG MIT EINEM BEFESTIGTEN TEIL, DAS MITHILFE EINES HAKENS GESICHERT IST
GLASS PANEL WITH AN ENCAPSULATED PROFILED JOINT COMPRISING AN ATTACHED PIECE SECURED BY MEANS OF A HOOK

(30) Priorité: 21.12.2018 FR 1873814
(43) Date de publication de la demande: 27.10.2021
(73) Titulaire: Saint-Gobain Glass France, 92400 Courbevoie (FR)
(72) Inventeur: SILVESTRINI, Laurent, 60400 BUSSY (FR)
(74) Mandataire: Saint-Gobain Recherche
(86) Numéro de dépôt international: PCT/EP2019/085221
(87) Numéro de publication internationale: WO 2020/126957

(56) Documents cités:
- CN-A- 104 354 570
- DE-A1- 10 146 628
- DE-A1- 19 945 540
- DE-U1-202015 008 647
- FR-A1- 3 033 738
- MA-B1- 33 650

## Description

L'invention concerne la fixation d'une pièce rapportée, telle qu'un enjoliveur, sur un vitrage, notamment un vitrage utilisé sur un véhicule.

Dans tout le présent document, l'expression « pièce rapportée » désigne un accessoire du vitrage, en particulier un accessoire de forme allongée ; elle ne désigne pas un élément de carrosserie de véhicule.

Il est connu de l'état de la technique de mettre en oeuvre un enjoliveur afin d'améliorer l'esthétique de certains vitrages, notamment ceux du domaine automobile. Cet enjoliveur, ou pièce rapportée, est couramment constitué d'un profilé venant se fixer à un joint profilé, par exemple en polymère souple tel que du polyuréthane, surmoulé sur la périphérie du vitrage. Il est mis en oeuvre actuellement des systèmes de fixation par collage entre cette pièce rapportée et le joint profilé. Certains vitrages sont de forme sensiblement triangulaire, comme par exemple les vitrages latéraux situés à l'arrière de certains véhicules automobiles. Ces vitrages présentent en partie arrière, c'est-à-dire sur la partie du vitrage située la plus à l'arrière du véhicule, une extrémité comportant un angle saillant. L'attachement de la pièce rapportée sur le joint profilé est problématique du fait de cet angle saillant. En effet, la surface de collage entre la pièce rapportée et le joint profilé est relativement faible car le collage est réalisé dans l'angle saillant. Par conséquent, la pièce rapportée a tendance à se désolidariser du joint profilé au cours du temps en raison des sollicitations mécaniques générées lors du fonctionnement du véhicule, comme par exemple des vibrations. Afin d'améliorer la fixation de la pièce rapportée sur le joint profilé, il a été imaginé de mettre en oeuvre un système mécanique tel que décrit dans la demande de brevet internationale WO2014/049256. Comme cela peut être vu sur les figures 1 et 2 de cette demande de brevet internationale, il est utilisé une pièce intermédiaire 5 se présentant sous la forme d'une clé dont une partie est passée à travers un trou ménagé dans une portion d'un joint profilé 3, cette partie venant ensuite retenir les ailes 40, 40' de la pièce rapportée 4 par rotation de la pièce intermédiaire 5 sur elle-même. L'inconvénient d'un vitrage comportant un tel système mécanique est qu'il s'étend vers l'intérieur du véhicule. Cette configuration induit par conséquent une réduction de l'espace disponible dans l'habitacle du véhicule. En outre, ce système mécanique est relativement complexe à produire. En effet, il est nécessaire de fabriquer une pièce rapportée 4 avec des ailes 40, 40', un joint profilé 3 comportant un trou 30, une pièce intermédiaire 5 et une pièce de pourtour 6 logée dans le pourtour du trou 30. La pièce de pourtour 6 est mise en place dans la portion de joint profilé 3 permettant ainsi d'accueillir la pièce intermédiaire 5. Il faut également fabriquer un outillage pour manipuler la pièce intermédiaire 5.

Il est également connu de FR 3 033738 A1, un vitrage automobile de configuration générale triangulaire, comportant un élément vitré, un joint comportant des ouvertures traversantes dans la direction extérieur-intérieur. Le vitrage comporte également un enjoliveur qui comporte des pattes s'étendant perpendiculairement à l'enjoliveur et aptes à s'introduire dans les ouvertures puis à être repliées derrière le joint. Ces pattes sont formées avec l'enjoliveur et sont donc constituées de la même matière. Ce système nécessite un grand nombre de pattes qui doivent être pliées derrière le joint après fixation de l'enjoliveur sur le joint. Une fois posé, l'enjoliveur ne peut donc plus être retiré sans casser les pattes.

La présente invention a ainsi pour but de remédier aux inconvénients de la technique antérieure et d'améliorer la fixation d'une pièce rapportée sur un joint profilé de vitrage, le vitrage comportant une partie avec un angle saillant.

Pour ce faire, la présente invention a notamment pour objet un vitrage comprenant un élément vitré comportant une face intérieure, une face extérieure et un chant situé entre ces deux faces et présentant au moins deux bords non parallèles et un coin situé entre ces deux bords, au moins une portion de joint profilé située le long desdits bords et du coin, au contact d'une partie de ladite face extérieure et au moins une pièce rapportée telle qu'un enjoliveur, située le long desdits bords et du coin et plus à l'extérieur que ladite portion de joint profilé, le vitrage comporte dans l'environnement dudit coin et sous une face intérieure de la pièce rapportée, un crochet présentant un tronc s'étendant vers l'intérieur et une branche s'étendant à partir dudit tronc soit en direction centripète, soit en direction centrifuge, ladite portion de joint profilé comportant une ouverture aménagée dans l'environnement dudit coin pour le passage de ladite branche. Ladite ouverture est traversante selon une direction centripète-centrifuge, perpendiculaire au chant dudit élément vitre, ladite ouverture n'étant de préférence pas traversante dans une direction extérieure-intérieure perpendiculaire à ladite direction centripète-centrifuge.

L'invention permet ainsi de simplifier la fixation de la pièce rapportée sur le joint profilé tout en étant robuste mécaniquement, notamment lors de sollicitations mécaniques telles que des vibrations.

De préférence, ladite ouverture s'étend sur une hauteur comprise entre 1,0 et 5,0 mm et sur une largeur comprise entre 5,0 et 20,0 mm.

Avantageusement, ledit joint profilé comporte une aile s'étendant au-delà du chant dudit élément vitré, ladite branche étant en appui sous ladite aile.

Avantageusement, ledit joint profilé comporte un pilier s'étendant vers l'extérieur et réalisant un support pour la face intérieure de ladite pièce rapportée.

De préférence, ledit crochet comporte une face supérieure.

Dans un mode de réalisation, ladite face intérieure de ladite pièce rapportée étant solidaire dudit crochet par l'intermédiaire de ladite face supérieure, ledit crochet et ladite pièce rapportée ne formant de préférence qu'une seule et même pièce.

Dans un autre mode de réalisation, le crochet (5) est une pièce distincte de la pièce rapportée (4).

Avantageusement, ladite ouverture se situe au-dessus de ladite face extérieure de l'élément vitré.

De préférence, ladite ouverture présente une hauteur supérieure à l'épaisseur de ladite branche.

De préférence, ladite ouverture a une forme sensiblement rectangulaire.

De préférence, ledit crochet comporte en outre un tronc disposé sensiblement perpendiculairement par rapport à sa face supérieure et par rapport à sa branche.

La présente invention se rapporte également à un procédé de fabrication d'un vitrage comportant les étapes suivantes :
- obtenir un élément vitré comprenant une portion de joint profilé comportant lui-même une ouverture ;
- obtenir une pièce rapportée telle qu'un enjoliveur comportant un crochet ;
- glisser ledit crochet dans ladite ouverture.

Selon un mode de réalisation, le procédé de fabrication du vitrage comporte les étapes suivantes :
- obtenir un élément vitré sur lequel est fixé une portion de joint profilé comportant lui-même une ouverture ;
- obtenir une pièce rapportée telle qu'un enjoliveur ;
- obtenir un crochet présentant un tronc s'étendant vers l'intérieur et une branche s'étendant à partir dudit tronc soit en direction centripète, soit en direction centrifuge ;
- glisser ledit crochet dans ladite ouverture ;
- appliquer la pièce rapportée (4).

Ce procédé de fabrication a pour avantage un assemblage simple et rapide de la pièce rapportée sur le joint profilé.

De préférence, l'élément vitré comporte une face extérieure, l'étape du glissement dudit crochet dans ladite ouverture étant réalisée du côté de ladite face extérieure.

Dans un mode préféré du procédé de fabrication du vitrage, la branche du crochet s'étend à partir du tronc en direction centrifuge et le glissement dudit crochet dans ladite ouverture est réalisé en direction centrifuge.

Avantageusement, l'application de la pièce rapportée permet de couvrir ledit crochet et la portion de joint profilé.

On décrira ci-après, à titre d'exemples non limitatifs, plusieurs formes d'exécution de la présente invention, en référence aux dessins annexés sur lesquels :
[fig 1] est une vue en perspective d'un vitrage selon un mode de réalisation de l'invention ;
[fig 2] est une vue en perspective du vitrage de la figure 1 sans pièce rapportée ;
[Fig 3] illustre une vue en coupe dans le coin du vitrage présenté sur la figure 1 ;
[fig 4] représente une vue de l'extérieur, en perspective, du coin du vitrage de la figure 2 ;
[fig 5] représente une vue éclatée, de l'intérieur, en perspective, du coin du vitrage de la figure 2 ;
[Fig 6] représente une vue de l'intérieur, en perspective, du coin du vitrage de la figure 2.

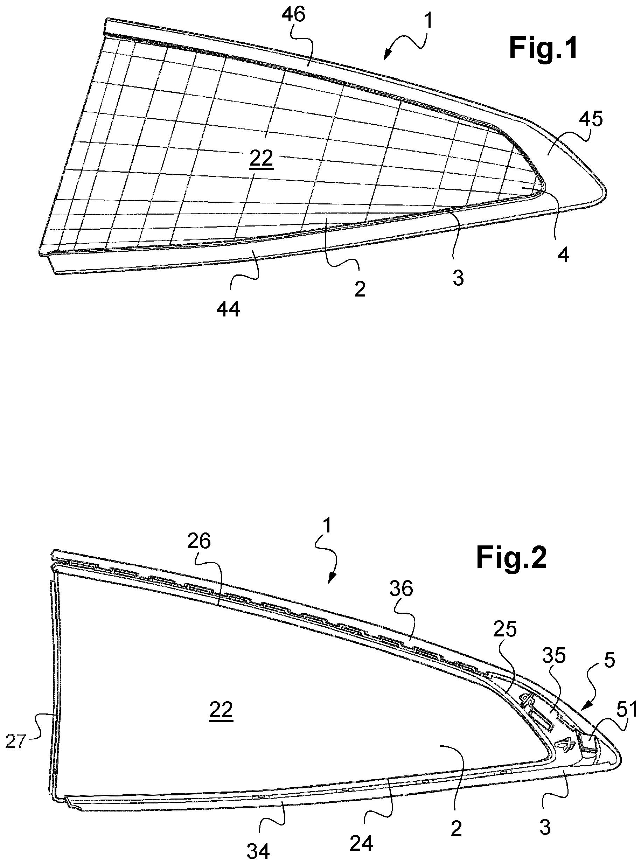

Le vitrage 1 selon l'invention illustré sur la figure 1 est un vitrage latéral arrière fixe d'un véhicule, appelé également custode arrière. Il est destiné à fermer une baie réalisant une séparation entre un espace intérieur et un espace extérieur du véhicule. Le vitrage 1 est illustré sur la figure 1 tel que vu de l'extérieur du véhicule. Le vitrage 1 comporte un élément vitré 2 muni d'une pièce rapportée 4, par exemple un enjoliveur, et d'un joint profilé 3 disposé sur une partie du pourtour de l'élément vitré 2.

En référence à la figure 2, on peut voir le vitrage 1 comportant l'élément vitré 2 encapsulé dans le joint profilé 3, sans la pièce rapportée 4. Dans le mode de réalisation de l'invention illustré ici, le vitrage 1 est une vitre latérale arrière destinée à être montée à l'arrière gauche d'un véhicule. Le vitrage 1 est de forme sensiblement triangulaire.

L'élément vitré 2 présente ainsi une configuration générale de triangle avec un bord latéral avant 27, destiné à être positionné sensiblement verticalement, un bord inférieur 24, un bord supérieur 26 et un coin 25 arrière, située à la liaison entre le bord inférieur 24 et le bord supérieur 26. La face principale de l'élément vitré 2 visible en figure 1 et 2 est une face extérieure 22.

Le joint profilé 3 est positionné sur une partie de la périphérie de l'élément vitré 2, à savoir le long de son bord inférieur 24 puis il continue ensuite le long de son coin 25 et le long de son bord supérieur 26. Le bord latéral avant 27 de l'élément vitré 2 n'est pas recouvert par le joint profilé 3 et reste, par conséquent, libre. Le joint profilé 3 présente ainsi une portion longitudinale inférieure 34, ainsi qu'une portion de coin 35 et également une portion longitudinale supérieure 36. Ces trois portions du joint profilé 3 sont liées entre elles et forment une portion de joint qui est continue et unique, le long des deux bords longitudinaux 24, 26 et du coin 25 de l'élément vitré 2.

Le joint profilé 3 est destiné à être en partie recouvert, vue de l'extérieur, par la pièce rapportée 4. La pièce rapportée 4 présente ainsi une section longitudinale inférieure 44, ainsi qu'une section de coin 45 et également une section longitudinale supérieure 46. Ces trois sections de la pièce rapportée 4 sont liées entre elles et forment la pièce rapportée 4, unique, qui est continue le long des deux bords longitudinaux 24, 26 et du coin 25 de l'élément vitré 2.

Le vitrage 1 comporte un crochet 5 pour la fixation de la pièce rapportée 4. Ce crochet 5 est situé dans l'environnement du coin 25 de l'élément vitré 2.

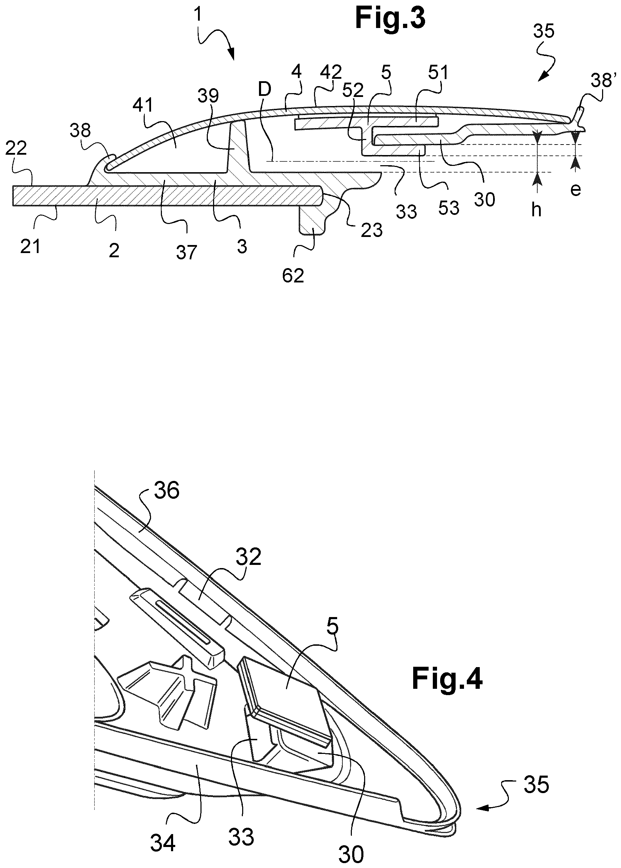

La figure 3 illustre une vue en coupe au niveau de ce coin 25. L'élément vitré 2 présente une face intérieure 21, destinée à être orientée vers l'espace intérieur du véhicule, une face extérieure 22 destinée à être orientée vers l'espace extérieur du véhicule, ainsi qu'un chant 23 périphérique. Dans le présent document, le terme "extérieur" désigne une orientation vers l'extérieur du véhicule destiné à recevoir le vitrage selon l'invention et le terme "intérieur" désigne une orientation vers l'intérieur du véhicule destiné à recevoir le vitrage selon l'invention.

L'élément vitré 2 peut être monolithique, c'est-à-dire constitué d'une feuille de matière unique, ou être composite, c'est-à-dire constitué de plusieurs feuilles de matière entre lesquelles est insérée au moins une couche de matière adhérente, dans le cas de vitrages feuilletés. La (ou les) feuille(s) de matière peut (ou peuvent) être minérale(s), notamment en verre, ou organique(s), notamment en matière plastique. Dans le cas d'un vitrage pour véhicule, le vitrage 1 présente généralement au moins partiellement, à sa périphérie, une bande d'ornementation (non illustrée).

Lorsque l'élément vitré 2 est en matière organique, il a été fabriqué préalablement à la mise en oeuvre de l'invention par moulage de la matière constitutive de l'élément vitré 2 dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré 2. Souvent, l'élément vitré 2 en matière organique n'est pas plat mais bombé.

Lorsque l'élément vitré 2 est en matière minérale, il a été fabriqué préalablement à la mise en oeuvre de l'invention par fusion de matière minérale en une feuille plate, puis par découpe de cette feuille et éventuellement bombage et/ou trempe de cette feuille.

Sur la figure 1, l'élément vitré 2 est un vitrage monolithique.

Le vitrage illustré en figure 1 est un vitrage fixe, mais la présente invention peut aussi s'appliquer à un vitrage mobile.

Le joint profilé 3 présente une partie intérieure 31 ainsi qu'une partie extérieure 32. Il est fabriqué par mise en oeuvre d'un procédé de fabrication appelé « encapsulation » car il comporte une étape de moulage du joint profilé 3 dans un dispositif de moulage, entre deux éléments de moulage, un élément de moulage accueillant la face intérieure 21 du vitrage et un élément de moulage accueillant la face extérieure 22 du vitrage, ces deux éléments de moulage étant refermés l'un sur l'autre pendant l'étape de moulage tout en réalisant entre eux une cavité de moulage qui est remplie de la matière constitutive du joint profilé 3 pendant l'étape de moulage de ce cordon.

Le joint profilé 3 est, de préférence, disposé sur une partie de la périphérie de l'élément vitré 2 mais ce joint profilé 3 pourrait tout à fait être positionné sur toute la périphérie ou sur une partie quelconque de l'élément vitré 2.

Sur la figure 1, la pièce rapportée 4 recouvre presque toute la surface de la partie extérieure 32 du joint profilé 3. Comme visible en particulier sur la figure 3 la pièce rapportée 4 vient en appui à ses deux extrémités latérales contre des lèvres latérales extérieures 38, 38' du joint profilé 3.

C'est pour améliorer l'aspect esthétique du vitrage, que le joint profilé 3, visible de l'extérieur du véhicule, est, pour l'essentiel, masqué par la pièce rapportée 4 constituée ici d'un profilé enjoliveur.

La pièce rapportée 4 est préfabriquée : elle a été fabriquée, et éventuellement mise en forme, préalablement à sa fixation au vitrage. Elle peut être en aluminium, alliage d'aluminium, acier et notamment acier inoxydable, matière plastique et notamment matière plastique renforcée de charge comme par exemple de charges minérales à base de silice ou de fibres de verre. Elle peut aussi être réalisée en plusieurs parties, avec éventuellement des matériaux différents pour au moins deux parties.

En considérant que le vitrage 1 arrière fixe est positionné d'une manière sensiblement verticale, la pièce rapportée 4 est allongée suivant la longueur du véhicule. La pièce apportée 4 présente ainsi une forme complexe : elle présente une forme générale d'arc ou de U avec une partie centrale et une partie en retour à chaque extrémité de la partie centrale.

En référence à la figure 3, on peut voir le vitrage 1 comprenant la pièce rapportée 4 positionnée sur le joint profilé 3. La pièce rapportée 4 comprend une face intérieure 41, destinée à être orientée vers l'intérieur du véhicule après assemblage du vitrage 1 sur le véhicule, et une face extérieure 42, destinée à être orientée vers l'extérieur du véhicule après assemblage du vitrage 1 sur le véhicule. Le crochet 5 comporte une face supérieure 51, destinée à être orientée vers l'extérieur du véhicule, et un tronc 52 s'étendant perpendiculairement par rapport à la face supérieure 51 vers l'intérieur. Il comprend également une branche 53 s'étendant perpendiculairement par rapport au tronc 52. La face supérieure 51 et la branche 53 sont ainsi sensiblement parallèles et créent un espace 54 entre elles. Le crochet 5 est en contact avec la pièce rapportée 4 par l'intermédiaire de sa face supérieure 51.

Dans un mode de réalisation, le crochet 5 et la pièce rapportée 4 sont deux pièces distinctes qui peuvent être réalisées dans des matières différentes.

Dans un autre mode de réalisation, la face supérieure 51 du crochet 5 peut être collée à la face intérieure 41 de la pièce rapportée 4. ou peut être soudée sur la face intérieure 41 de la pièce rapportée 4. Lors de cette opération de soudage, on chauffe l'extrémité 521 du tronc 52 de manière à avoir une cohésion chimique entre le tronc 52 et la face intérieure 41 de la pièce rapportée 4. Dans encore un autre mode de réalisation, le crochet 5 peut être directement obtenu lors de la fabrication de la pièce rapportée 4, par exemple lors d'une opération d'estampage. Le joint profilé 3 présente, vu en coupe, une base 37 qui est située sur et au contact de la face extérieure 22 et qui s'étend plus loin latéralement que le chant 23 dans une continuité de forme, ainsi que vers l'intérieur pour former une butée 62 qui s'étend vers l'intérieur. Cette base 37 porte un pilier 39 s'étendant vers l'extérieur et réalisant un support pour la face intérieure 41.

Le joint profilé 3 présente par ailleurs, une aile latérale 30 qui s'étend plus loin latéralement que le chant 23 au-dessus/plus vers l'extérieur, que la base 37 tout en étant sensiblement parallèle à la base 37. La base 37 se termine à son extrémité centrifuge par l'une des deux lèvres extérieure 38. Dans le présent document, le terme "centrifuge" désigne une orientation selon une direction D, telle que représentée sur la figure 3, qui tend à s'éloigner du centre du vitrage 1 et le terme "centripète" désigne une orientation selon la direction D qui tend à se rapprocher du centre du vitrage 1, la direction D étant perpendiculaire au chant 23.

Cette configuration en coupe du joint profilé 3 se constate de préférence le long de la totalité du joint profilé 3.

Le joint profilé 3 comprend en outre une ouverture 33, spécifiquement localisé dans la section de coin 35, également montrée sur la figure 4. Cette ouverture est située à la liaison entre la base 37 et l'aile latérale 30. Elle reçoit la branche 53 du crochet 5. Cette ouverture 33, qui traverse la totalité de l'épaisseur du joint profilé 3, a pour fonction de retenir la pièce rapportée 4 par le truchement du crochet 5. La branche 53 est ainsi située sous l'aile 30 et plus vers l'intérieur que l'aile 30, au contact de cette aile 30. L'aile 30 se termine à son extrémité centripète par l'autre des deux lèvres extérieure 38'.

L'avantage de cette configuration de vitrage 1, comportant le crochet 5, est qu'elle permet un gain d'espace dans l'habitacle du véhicule par rapport à la configuration de l'état de la technique. En effet, la branche 53 est située au-dessus de l'élément vitré 2, plus vers l'extérieur, et par conséquent ne s'étend pas au-delà de la face intérieure 21 de l'élément vitré 2 permettant ainsi d'augmenter l'espace disponible dans l'habitacle du véhicule. Un autre avantage de la configuration du vitrage 1, selon l'invention, est que l'opération de montage de la pièce rapportée 4 est simplifiée par rapport à l'état de l'art existant. En effet, la pièce rapportée 4 est montée sur le joint profilé 3 par l'extérieur, à savoir du côté de la face extérieur 22 de l'élément vitré 2. Lors de cette opération de montage, on glisse le crochet 5, et plus particulièrement la branche 53, dans l'ouverture 33 du joint profilé 3, l'aile 30 du joint profilé 3 venant, quant à elle, se loger dans l'espace 54 du crochet 5.

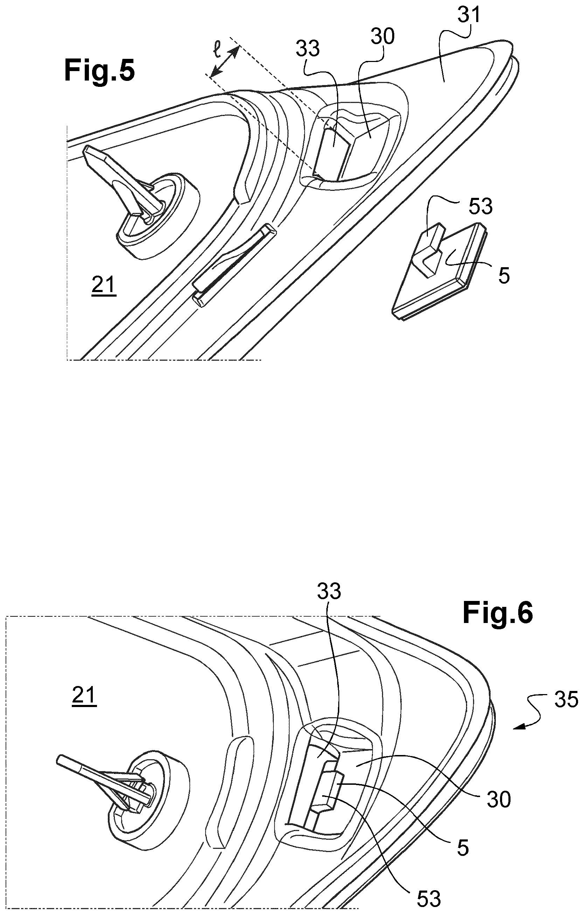

L'ouverture 33 a une forme sensiblement rectangulaire. Cette forme a l'avantage d'être simple à fabriquer. L'ouverture présente une largeur l et une hauteur h, comme visible plus particulièrement en figure 5. La largeur l de l'ouverture 33 est supérieure à la largeur de la branche 53 et la hauteur h est supérieure à l'épaisseur de la branche 53 de façon à pouvoir glisser facilement la branche 53 dans l'ouverture 33. A titre d'exemple non limitatif, la largeur l de l'ouverture 33 est de 12,0 mm, la largeur de la branche est de 10,0 mm, la hauteur h de l'ouverture 33 est de 2,0 et l'épaisseur de la branche 53 est de 1,2 mm.

L'ouverture 33 est traversante selon la direction D centripète-centrifuge. Cette ouverture 33 n'est ici pas traversante dans une direction extérieure-intérieure perpendiculaire à la direction D centripète-centrifuge. En effet, l'aile 30 s'étend latéralement, en direction centripète, jusqu'à venir au-dessus de la partie de la base 37 qui se prolonge latéralement au-delà du chant 23.

Ainsi, le mouvement d'introduction de la branche 53 dans l'ouverture 33 présente à la fois une composante selon la direction D centripète-centrifuge et à la fois selon une direction extérieure-intérieure perpendiculaire à cette direction D centripète-centrifuge mais la composante selon la direction D centripète-centrifuge est beaucoup plus importante. Le maintien de la branche 53, et donc de la pièce rapportée 4, par l'aile 30 est ainsi très efficace, tout en étant très compact.

En référence maintenant à la figure 5, on peut voir en vue de dessous la portion de coin 35 du joint profilé 3. Le crochet 5 est éloigné de l'ouverture 33 et prêt à être glissé dans celle-ci afin d'assembler la pièce rapportée 4 au joint profilé 3. Lors de l'assemblage de la pièce rapportée 4 sur le joint profilé 3, l'extrémité centripète de l'aile 30 vient en contact, en fin d'assemblage, avec le tronc 52 du crochet 5, permettant de cette manière de positionner précisément la pièce rapportée 4 par rapport au joint profilé 3. Sur la figure 6, le crochet 5 a été glissé dans l'ouverture 33 permettant ainsi de fixer la pièce rapportée 4 sur le joint profilé 3. La branche 53 est apposée sous et contre la face intérieure de l'aile 30.

## Revendications

1. Vitrage (1) comprenant un élément vitré (2) comportant une face intérieure (21), une face extérieure (22) et un chant (23) situé entre ces deux faces et présentant au moins deux bords (24, 26) non parallèles et un coin (25) situé entre ces deux bords, au moins une portion de joint profilé (3) située le long desdits bords (24, 26) et du coin (25), au contact d'une partie de ladite face extérieure (22) et au moins une pièce rapportée (4) telle qu'un enjoliveur, située le long desdits bords (24, 26) et du coin (25) et plus à l'extérieur que ladite portion de joint profilé (3), le vitrage (1) comporte dans l'environnement dudit coin (25) et sous une face intérieure (41) de la pièce rapportée (4) un crochet (5) présentant un tronc (52) s'étendant vers l'intérieur et une branche (53) s'étendant à partir dudit tronc (52) soit en direction centripète, soit en direction centrifuge, ladite portion de joint profilé (3) comportant une ouverture (33) aménagée dans l'environnement dudit coin (25) pour le passage de ladite branche (53), **caractérisé en ce que** ladite ouverture (33) est traversante selon une direction (D) centripète-centrifuge, perpendiculaire au chant (23) dudit élément vitre (2), ladite ouverture (33) n'étant de préférence pas traversante dans une direction extérieure-intérieure perpendiculaire à ladite direction (D) centripète-centrifuge.

2. Vitrage (1) selon la revendication 1, dans lequel ladite ouverture (33) s'étend sur une hauteur (h) comprise entre 1,0 et 5,0 mm et sur une largeur (l) comprise entre 5,0 et 20,0 mm.

3. Vitrage (1) selon l'une quelconque des revendications 1 et 2, dans lequel ledit joint profilé (3) comporte une aile (30) s'étendant au-delà du chant (23) dudit élément vitré (2), ladite branche (53) étant en appui sous ladite aile (30).

4. Vitrage (1) selon l'une quelconque des revendications 1 à 3, dans lequel ledit joint profilé (3) comporte un pilier (39) s'étendant vers l'extérieur et réalisant un support pour la face intérieure (41) de ladite pièce rapportée (4).

5. Vitrage (1) selon l'une quelconque des revendications 1 à 4, dans lequel ladite ouverture (33) se situe au-dessus de ladite face extérieure (22) de l'élément vitré (2).

6. Vitrage (1) selon l'une quelconque des revendications 1 à 5, dans lequel ladite ouverture (33) présente une hauteur supérieure à l'épaisseur de ladite branche (53).

7. Vitrage (1) selon l'une quelconque des revendications 1 à 6, **caractérisé en ce que** ladite ouverture (33) a une forme sensiblement rectangulaire.

8. Vitrage (1) selon l'une quelconque des revendications 1 à 7, **caractérisé en ce que** ledit tronc (52) du crochet (5) est disposé sensiblement perpendiculairement par rapport à sa face supérieure (51) et par rapport à sa branche (53).

9. Vitrage (1) selon l'une quelconque des revendications 1 à 8, **caractérisé en ce que** le crochet (5) est une pièce distincte de la pièce rapportée (4).

10. Vitrage (1) selon l'une quelconque des revendications 1 à 8, dans lequel ledit crochet (5) comporte une face supérieure (51), ladite face intérieure (41) de ladite pièce rapportée (4) étant solidaire dudit crochet (5) par l'intermédiaire de ladite face supérieure (51), ledit crochet (5) et ladite pièce rapportée (4) ne formant de préférence qu'une seule et même pièce.

11. Procédé de fabrication d'un vitrage (1) selon l'une quelconque des revendications 1 à 10, comportant les étapes suivantes :
- obtenir un élément vitré (2) comprenant une portion de joint profilé (3) comportant lui-même une ouverture (33) ;
- obtenir une pièce rapportée (4) telle qu'un enjoliveur comportant un crochet (5) ;
- glisser ledit crochet (5) dans ladite ouverture (33).

12. Procédé de fabrication d'un vitrage (1) selon l'une quelconque des revendications 1 à 9, comportant les étapes suivantes :
- obtenir un élément vitré (2) sur lequel est fixé une portion de joint profilé (3) comportant lui-même une ouverture (33) ;
- obtenir une pièce rapportée (4) telle qu'un enjoliveur ;
- obtenir un crochet (5) présentant un tronc (52) s'étendant vers l'intérieur et une branche (53) s'étendant à partir dudit tronc (53) soit en direction centripète, soit en direction centrifuge ;
- glisser ledit crochet (5) dans ladite ouverture (33) ;
- appliquer la pièce rapportée (4).

13. Procédé de fabrication selon l'une quelconque des revendications 11 et 12, dans lequel l'élément vitré (2) comporte une face extérieure (22), l'étape de glissement dudit crochet (5) dans ladite ouverture (33) étant réalisée du côté de ladite face extérieure (22).

14. Procédé de fabrication selon l'une quelconque des revendications 11 à 13, **caractérisé en ce que** la branche (53) du crochet (5) s'étend à partir du tronc (53) en direction centrifuge et ce que le glissement dudit crochet (5) dans ladite ouverture (33) est réalisé en direction centrifuge.

15. Procédé de fabrication selon l'une quelconque des revendications 11 à 14, **caractérisé en ce que** l'application de la pièce rapportée (4) permet de couvrir ledit crochet (5) et la portion de joint profilé (3).

## Patentansprüche

1. Verglasung (1), umfassend ein verglastes Element (2), das eine Innenfläche (21), eine Außenfläche (22) und eine Kante (23) aufweist, die zwischen diesen zwei Flächen gelegen ist und mindestens zwei nicht parallele Ränder (24, 26) und eine Ecke (25) vorweist, die zwischen diesen zwei Rändern gelegen ist, mindestens einen Profildichtungsabschnitt (3), der entlang der Ränder (24, 26) und der Ecke (25) gelegen ist, in Berührung mit einem Teil der Außenfläche (22), und mindestens ein zugefügtes Stück (4), wie zum Beispiel eine Zierleiste, das entlang der Ränder (24, 26) und der Ecke (25) und weiter außen als der Profildichtungsabschnitt (3) gelegen ist, wobei die Verglasung (1) in der Umgebung der Ecke (25) und unter einer Innenfläche (41) des zugefügten Stücks (4) einen Haken (5) aufweist, der einen Stamm (52), der sich nach innen erstreckt, und einen Schenkel (53) vorweist, der sich von dem Stamm (52) aus in eine Zentripetalrichtung erstreckt, wobei der Profildichtungsabschnitt (3) eine Öffnung (33), die in der Umgebung der Ecke (25) angeordnet ist, für den Durchlass des Schenkels (53) aufweist,
**dadurch gekennzeichnet, dass** die Öffnung (33) in einer Zentripetal-Zentrifugalrichtung (D) senkrecht zu der Kante (23) des Glaselements (2) durchgehend ist, wobei die Öffnung (33) vorzugsweise nicht in eine Außen-Innenrichtung senkrecht zu der Zentripetal-Zentrifugalrichtung (D) durchgehend ist.

2. Verglasung (1) nach Anspruch 1, wobei die Öffnung (33) sich über eine Höhe (h) zwischen 1,0 und 5,0 mm und über eine Länge (l) zwischen 5,0 und 20,0 mm erstreckt.

3. Verglasung (1) nach einem der Ansprüche 1 und 2, wobei die Profildichtung (3) einen Flügel (30) aufweist, der sich über die Kante (23) des verglasten Elements (2) hinaus erstreckt, wobei der Schenkel (53) unter dem Flügel (30) anliegt.

4. Verglasung (1) nach einem der Ansprüche 1 bis 3, wobei die Profildichtung (3) eine Stütze (39) umfasst, die sich nach außen erstreckt und einen Träger für die Innenfläche (41) des zugefügten Stücks (4) bildet.

5. Verglasung (1) nach einem der Ansprüche 1 bis 4, wobei die Öffnung (33) oberhalb der Außenfläche (22) des verglasten Elements (2) gelegen ist.

6. Verglasung (1) nach einem der Ansprüche 1 bis 5, wobei die Öffnung (33) eine Höhe vorweist, die größer als die Dicke des Schenkels (53) ist.

7. Verglasung (1) nach einem der Ansprüche 1 bis 6,
**dadurch gekennzeichnet, dass** die Öffnung (33) eine im Wesentlichen rechteckige Form besitzt.

8. Verglasung (1) nach einem der Ansprüche 1 bis 7,
**dadurch gekennzeichnet, dass** der Stamm (52) des Hakens (5) im Wesentlichen senkrecht relativ zu seiner oberen Fläche (51) und relativ zu seinem Schenkel (53) eingerichtet ist.

9. Verglasung (1) nach einem der Ansprüche 1 bis 8,
**dadurch gekennzeichnet, dass** der Haken (5) ein Stück ist, das von dem zugefügten Stück (4) getrennt ist.

10. Verglasung (1) nach einem der Ansprüche 1 bis 8, wobei der Haken (5) eine obere Fläche (51) aufweist, wobei die Innenfläche (41) des zugefügten Stücks (4) mit dem Haken (5) über die obere Fläche (51) fest verbunden ist, wobei der Haken (5) und das zugefügte Stück (4) vorzugsweise nur ein einziges und gleiches Stück ausbilden.

11. Verfahren zum Herstellen einer Verglasung (1) nach einem der Ansprüche 1 bis 10, das die folgenden Schritte aufweist:
- Erhalten eines verglasten Elements (2), umfassend einen Profildichtungsabschnitt (3), der seinerseits eine Öffnung (33) aufweist;
- Erhalten eines zugefügten Stücks (4), wie zum Beispiel eine Zierleiste, das einen Haken (5) aufweist;
- Gleiten des Hakens (5) in die Öffnung (33).

12. Verfahren zum Herstellen einer Verglasung (1) nach einem der Ansprüche 1 bis 9, das die folgenden Schritte aufweist:
- Erhalten eines verglasten Elements (2), auf dem ein Profildichtungsabschnitt (3) befestigt ist, der seinerseits eine Öffnung (33) aufweist;
- Erhalten eines zugefügten Stücks (4), wie zum Beispiel eine Zierleiste;
- Erhalten eines Hakens (5), der einen Stamm (52), der sich nach innen erstreckt, und einen Schenkel (53) vorweist, der sich von dem Stamm (53) aus entweder in Zentripetalrichtung oder in Zentrifugalrichtung erstreckt;
- Gleiten des Hakens (5) in die Öffnung (33);
- Anbringen des zugefügten Stücks (4).

13. Herstellungsverfahren nach einem der Ansprüche 11 und 12, wobei das verglaste Element (2) eine Außenfläche (22) aufweist, wobei der Schritt des Gleitens des Hakens (5) in die Öffnung (33) seitens der Außenfläche (22) durchgeführt wird.

14. Herstellungsverfahren nach einem der Ansprüche 11 bis 13,
**dadurch gekennzeichnet, dass** der Schenkel (53) des Hakens (5) sich von dem Stamm (53) aus in Zentrifugalrichtung erstreckt, und **dass** das Gleiten des Hakens (5) in die Öffnung (33) in Zentrifugalrichtung durchgeführt wird.

15. Herstellungsverfahren nach einem der Ansprüche 11 bis 14,
**dadurch gekennzeichnet, dass** das Anbringen des zugefügten Stücks (4) es ermöglicht, den Haken (5) und den Profildichtungsabschnitt (3) zu bedecken.

## Claims

1. A glazing unit (1) comprising a glazed element (2) having an inner face (21), an outer face (22) and an edge face (23) situated between these two faces, and having at least two nonparallel edges (24, 26) and a corner (25) situated between these two edges, at least a portion of profiled seal (3) situated along said edges (24, 26) and around the corner (25), in contact with a part of said outer face (22), and at least one attached part (4) such as a trim, situated along said edges (24, 26) and around the corner (25) and farther out than said portion of profiled seal (3), the glazing unit (1) has, in the region of said corner (25) and under an inner face (41) of the attached part (4), a hook (5) having a stem (52) extending inward and an arm (53) extending from said stem (52) either in a centripetal direction or in a centrifugal direction, said portion of profiled seal (3) having an opening (33) provided in the region of said corner (25) for said arm (53) to pass through, **characterized in that** said opening (33) is a through-opening in a centripetal/centrifugal direction (D), perpendicular to the edge face (23) of said glazed element (2), said opening (33) preferably not being a through-opening in an outward/inward direction perpendicular to said centripetal/centrifugal direction (D).

2. The glazing unit (1) as claimed in claim 1, wherein said opening (33) extends over a height (h) of between 1.0 and 5.0 mm and across a width (l) of between 5.0 and 20.0 mm.

3. The glazing unit (1) as claimed in either one of claims 1 and 2, wherein said profiled seal (3) has a flange (30) extending beyond the edge face (23) of said glazed element (2), said arm (53) being in abutment under said flange (30).

4. The glazing unit (1) as claimed in any one of claims 1 to 3, wherein said profiled seal (3) has a rib (39) that extends outward and forms a support for the inner face (41) of said attached part (4).

5. The glazing unit (1) as claimed in any one of claims 1 to 4, wherein said opening (33) is situated above said outer face (22) of the glazed element (2).

6. The glazing unit (1) as claimed in any one of claims 1 to 5, wherein said opening (33) has a height greater than the thickness of said arm (53).

7. The glazing unit (1) as claimed in any one of claims 1 to 6, **characterized in that** said opening (33) has an approximately rectangular shape.

8. The glazing unit (1) as claimed in any one of claims 1 to 7, **characterized in that** said stem (52) of the hook (5) is disposed substantially perpendicularly with respect to the upper face (51) thereof and with respect to the arm (53) thereof.

9. The glazing unit (1) as claimed in any one of claims 1 to 8, **characterized in that** the hook (5) is a separate part from the attached part (4).

10. The glazing unit (1) as claimed in any one of claims 1 to 8, wherein said hook (5) has an upper face (51), said inner face (41) of said attached part (4) being secured to said hook (5) via said upper face (51), said hook (5) and said attached part (4) forming preferably only a single part.

11. A method for manufacturing a glazing unit (1) as claimed in any one of claims 1 to 10, having the following steps of:
- obtaining a glazed element (2) comprising a portion of profiled seal (3), itself having an opening (33);
- obtaining an attached part (4) such as a trim having a hook (5);
- sliding said hook (5) into said opening (33).

12. A method for manufacturing a glazing unit (1) as claimed in any one of claims 1 to 9, having the following steps of:
- obtaining a glazed element (2) to which a portion of profiled seal (3) is fastened, itself having an opening (33);
- obtaining an attached part (4) such as a trim;
- obtaining a hook (5) having a stem (52) extending inward and an arm (53) extending from said stem (53) either in a centripetal direction or in a centrifugal direction;
- sliding said hook (5) into said opening (33);
- applying the attached part (4).

13. The manufacturing method as claimed in either one of claims 11 and 12, wherein the glazed element (2) has an outer face (22), the step of sliding said hook (5) into said opening (33) being carried out from said outer face (22).

14. The manufacturing method as claimed in any one of claims 11 to 13, **characterized in that** the arm (53) of the hook (5) extends from the stem (53) in a centrifugal direction, and **in that** the sliding of said hook (5) into said opening (33) is carried out in a centrifugal direction.

15. The manufacturing method as claimed in any one of claims 11 to 14, **characterized in that** the application of the attached part (4) makes it possible to cover said hook (5) and the portion of profiled seal (3).
